# EUROPÄISCHE PATENTSCHRIFT

(11) **EP 1 142 317 B1**
(45) Veröffentlichungstag und Bekanntmachung des Hinweises auf die Patenterteilung: **05.06.2002**
(21) Anmeldenummer: 00904834.9
(22) Anmeldetag: 04.01.2000
(51) Int. Cl.: H04N 5/44

(54) **SIGNALVERARBEITUNGSEINHEIT FÜR DIGITALES TV-SYSTEM**
SIGNAL PROCESSING UNIT FOR A DIGITAL TV SYSTEM
UNITE DE TRAITEMENT DE SIGNAUX POUR SYSTEME DE TELEVISION NUMERIQUE

(30) Priorität: 05.01.1999 DE 19900136
(43) Veröffentlichungstag der Anmeldung: 10.10.2001
(73) Patentinhaber: Infineon Technologies AG, 81669 München (DE)
(72) Erfinder: BURCHARD, Bernd, Dr., D-45276 Essen (DE); SCHWENDT, Ralf, D-85609 Aschheim (DE)
(74) Vertreter: Banzer, Hans-Jörg, Dipl.-Ing.
(86) Internationale Anmeldenummer: DE0000037
(87) Internationale Veröffentlichungsnummer: WO0041389

(56) Entgegenhaltungen:
- EP-A- 0 851 677
- WO-A-97/05598
- WO-A-98/07274
- US-A- 5 808 617

## Beschreibung

Die Erfindung betrifft eine Signalverarbeitungseinheit für ein digitales TV-System.

Digitale TV-Systeme unterscheiden sich von den geläufigen analogen Fernsehsystemen durch eine fast ausschließlich digitale Verarbeitung und Aufbereitung der Bild- und Tonsignale, die über verschiedene Medien wie Satellit, Kabel, Antenne, CD-ROM, DVD usw. übertragen bzw. zur Verfügung gestellt werden. Diese Signale sind im allgemeinen nach einem bestimmten Standard digital codiert und komprimiert (zum Beispiel DVB-T bzw. MPEG-2 o.ä.) sowie gegebenenfalls verschlüsselt. Systeme dieser Art erfordern somit eine aufwendige Signalverarbeitung, die praktisch nur auf digitalem Wege realisierbar ist.

Aus der WO 97/05598 ist ein Adapter zur Flimmerreduktion eines computer systems bekannt. EP 0 851 677 und WO 98/07274 zeigen Einrichtungen zur Bildraten wandlung oder Erhöhung.

Der Erfindung liegt die Aufgabe zugrunde, eine Signalverarbeitungseinheit für ein digitales TV-System in der Weise weiterzubilden, daß die Bildrate zur Verbesserung des Bildeindrucks bei relativ geringem zusätzlichen Aufwand erhöht werden kann.

Gelöst wird diese Aufgabe mit einer Signalverarbeitungseinheit, die gemäß Anspruch 1 eine erste Einrichtung zur Beaufschlagung eines Videosignals mit graphischen Bildelementen und Textzeichen und eine zweite Einrichtung zur Bildratenwandlung aufweist, wobei der Ausgang der ersten Einrichtung mit dem Eingang der zweiten Einrichtung verbunden ist und der Ausgang der zweiten Einrichtung eine Treiberstufe zum Ansteuern eines Displays beaufschlagt.

Dadurch, daß die zweite Einrichtung zur Bildratenwandlung am Ende der Verarbeitungskette steht und somit die Bildratenwandlung nach allen Grafikoperationen durchgeführt wird, wird einerseits erreicht, daß die Grafikoperationen mit der niedrigeren Bildrate ausgeführt werden können, so daß die Anforderungen an die Schnelligkeit dieser Schaltungen nicht besonders hoch sind bzw. nicht erhöht werden müssen. Andererseits wird nur eine Schaltung zur Bildratenwandlung benötigt, die mit dem Gesamtsignal (das heißt TV-Bilddaten und Grafikbzw. Textdaten) beaufschlagt wird.

Die Unteransprüche haben vorteilhafte Weiterbildungen der Erfindung zum Inhalt.

Vorzugsweise ist eine gemeinsame Bildspeichereinrichtung vorgesehen, die mit der ersten und der zweiten Einrichtung zum Ein- und Auslesen von Bilddaten verbunden ist. Dadurch werden weitere Bauelemente eingespart.

Weiterhin kann mindestens eine Eingangsstufe zum Empfang von komprimierten Bilddaten von mindestens einem Übertragungsmedium, sowie mindestens eine Dekodiereinheit zum Umsetzen der komprimierten Bilddaten in digitale Pixeldaten eines Gesamtdatenstroms, der der ersten Einrichtung zugeführt wird, vorgesehen sein.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: die Grundstruktur einer solchen Ausführungsform und
- Fig. 2: ein Blockschaltbild der Ausführungsform gemäß Figur 1.

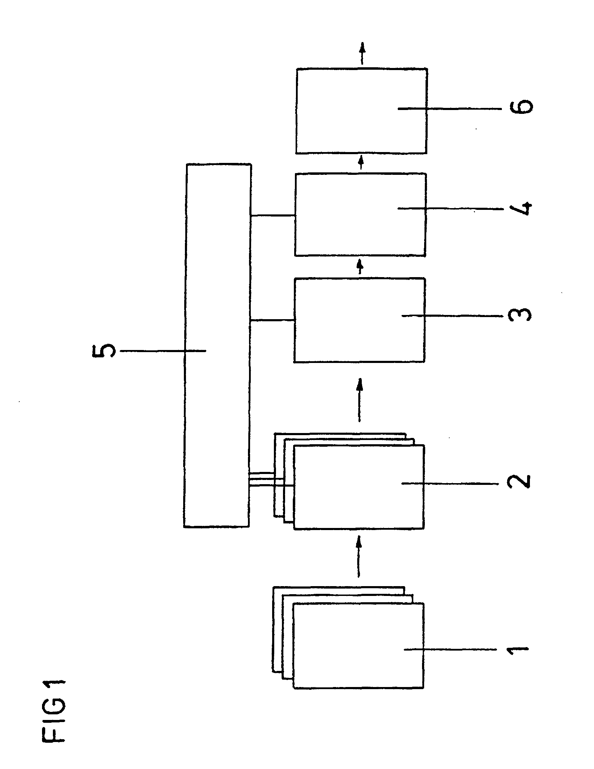

Eine erfindungsgemäße Signalverarbeitungseinheit für ein digitales TV-System umfaßt gemäß Figur 1 mehrere Eingangsstufen 1 für TV-Datenströme von verschiedenen Quellen. Dabei kann es sich um entsprechende Tuner für einen Empfang über Antenne, Kabel oder Satellit oder um andere Eingangsstufen zum Anschluß von Laufwerken für CD-ROMs, DVDs usw. handeln.

Die Datenströme können dabei mit bekannten digitalen Verfahren moduliert (wie QPSK, QAM, COFDM) und gegebenenfalls komprimiert (wie MPEG-1, MPEG-2) sein, wobei auch neue Übertragungsstandards wie DVB-T usw. realisierbar sind.

An die Eingangsstufen 1 schließen sich eine oder mehrere Dekodiereinheiten 2 an. Diese dienen zum Beispiel dazu, die komprimierten Bilddaten in digitale Pixeldaten umzusetzen und die verschiedenen Einzeldatenströme (Bild- und Tonsignale) zu einem Gesamtdatenstrom zu vereinen. Die Dekodiereinheiten 2 umfassen zu diesem Zweck zum Beispiel einen MPEG-2-Dekodierer und verschiedene Audiosignal-Dekodierer (z.B. für Stereo, Surround usw.).

Das am Ausgang der Dekodiereinheiten 2 anliegende digitale Videosignal (YUV-Signal) wird dann einer ersten Einrichtung 3 zugeführt, mit der es zur Wiedergabe von graphischen Bildelementen und Textzeichen beaufschlagt wird. Hierbei kann es sich zum Beispiel um Internetbrowser oder andere graphische Benutzeroberflächen handeln, über die eine interaktive Kommunikation des Benutzers über Telefonleitung o.ä. möglich ist.

An den Ausgang der ersten Einrichtung 3 ist eine zweite Einrichtung 4 zur Bildratenwandlung angeschlossen, mit der das Ausgangssignal der ersten Einrichtungen, das zum Beispiel eine Bildwiederholfrequenz von 50 (60) Hz beinhaltet, in ein 100 (120) Hz Bildsignal umgewandelt wird. Dies kann entweder durch eine Wiederholung des vorausgegangenen Bildes, oder durch eine Bewegungsschätzung und Bildinterpolation erfolgen. Diese beiden Verfahren an sich sind aus der analogen Fernsehbildverarbeitung bekannt.

Die Dekodiereinheit 2 sowie die erste und die zweite Einrichtung 3, 4 sind an eine gemeinsame Bildspeichereinrichtung 5 angeschlossen, wodurch eine wesentliche Einsparung von Bauelementen möglichen ist. Das Ausgangssignal der zweiten Einrichtung wird schließlich einer Treibereinheit 6 zugeführt, an die ein Display angeschlossen ist.

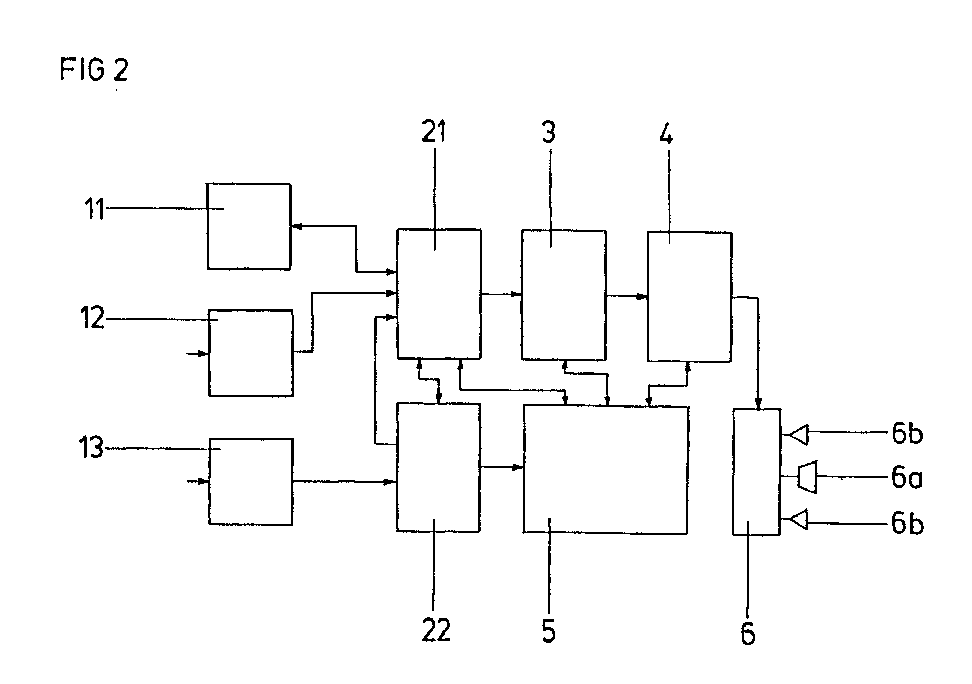

Figur 2 zeigt im Detail die Verschaltung der einzelnen Blöcke. Es sind drei Eingangsstufen 11, 12, 13 vorgesehen, die jeweils an verschiedene Programmquellen wie CD-ROM, DVD, Satellitenantenne, Kabel usw. angepaßt sind.

Die Ausgangssignale dieser Eingangsstufen werden zum Beispiel als 50 Hz MPEG-Datenströme den nachfolgenden digitalen Dekodiereinheiten 21, 22, die auch untereinander verbunden sind, zugeführt.

Die dekodierten Bildsignale gelangen dann zu der ersten Einrichtung 3 zur Beaufschlagung des Videosignals mit den oben genannten graphischen Bildelementen und Textzeichen.

An die erste Einrichtung 3 ist die zweite Einrichtung 4 zur Bildratenwandlung in der oben beschriebenen Weise angeschlossen, deren Ausgangssignal der Treibereinheit 6 zugeführt wird. An die Treibereinheit sind ein Display 6a sowie Lautsprecher 6b angeschlossen.

Schließlich ist auch in dieser Figur die gemeinsame Bildspeichereinrichtung 5 gezeigt, auf die sowohl die Dekodiereinheiten 21, 22, als auch die erste und zweite Einrichtung 3, 4 Zugriff nehmen können.

## Patentansprüche

1. Signalverarbeitungseinheit für ein digitales TV-System, mit einer ersten Einrichtung (3) zur Beaufschlagung eines Videosignals mit graphischen Bildelementen und Textzeichen, mit einer zweiten Einrichtung (4) zur Bildratenwandlung, und mit einer Treiberstufe (6) zum Ansteuern eines Displays (6a), wobei der Ausgang der ersten Einrichtung (3) mit dem Eingang der zweiten Einrichtung (4) verbunden ist, und
wobei die zweite Einrichtung (4) zur Erhöhung der Bildrate des Ausgangssignals der ersten Einrichtung (3) ausgestaltet ist und über ihren Ausgang die Treiberstufe (6) beaufschlagt.

2. Signalverarbeitungseinheit nach Anspruch 1,
**gekennzeichnet durch** eine Bildspeichereinrichtung (5), die mit der ersten und der zweiten Einrichtung (3, 4) zum Ein- und Auslesen von Bilddaten verbunden ist.

3. Signalverarbeitungseinheit nach Anspruch 2,
**dadurch gekennzeichnet, dass** mit der zweiten Einrichtung (4) die Bildrate durch Auslesen und Wiedergeben eines in der Bildspeichereinrichtung (5) gespeicherten vorausgegangenen Bildes erhöhbar ist.

4. Signalverarbeitungseinheit nach Anspruch 2,
**dadurch gekennzeichnet, dass** mit der zweiten Einrichtung (4) die Bildrate durch Auslesen und Wiedergeben eines in der Bildspeichereinrichtung (5) gespeicherten und durch Bewegungsauswertung und Bildinterpolation anhand von vorausgegangenen Bildern errechneten Zwischenbildes veränderbar ist.

5. Signalverarbeitungseinheit nach einem der Ansprüche 2 bis 4,
**dadurch gekennzeichnet, dass** mit der zweiten Einrichtung (4) das Bildformat durch Auslesen und Wiedergeben der in der Bildspeichereinrichtung (5) gespeicherten und durch Bewegungsanswertung und Pixelinterpolation unter Zuhilfenahme von vorausgegangenen Bildern errechneten Pixelzwischenwerte frei veränderbar ist.

6. Signalverarbeitungseinheit nach einem der Ansprüche 2 bis 5,
**dadurch gekennzeichnet, dass** mit der zweiten Einrichtung (4) der Bild-Scan-Mode durch Auslesen und Wiedergeben der in der Bildspeichereinrichtung (5) gespeicherten und durch Bewegungsauswertung und Bildinterpolation unter Zuhilfenahme von vorausgegangenen Bildern errechneten Zwischenbilder von interlaced auf progressive Scan umsetzbar ist.

7. Signalverarbeitungseinheit nach einem der vorhergehenden Ansprüche,
**gekennzeichnet durch** mindestens eine Eingangsstufe (1) zum Empfang von komprimierten Bilddaten von mindestens einem Übertragungsmedium, sowie mindestens eine Dekodiereinheit (2) zum Umsetzen der Bilddaten in digitale Pixeldaten eines Gesamtdatenstroms, der der ersten Einrichtung (3) zugeführt wird.

## Claims

1. Signal processing unit for a digital TV system,
having a first device (3) for acting on a video signal with graphical picture elements and text characters,
having a second device (4) for frame-rate conversion, and
having a driver stage (6) for driving a display (6a),
the output of the first device (3) being connected to the input of the second device (4), and
the second device (4) being configured for increasing the frame rate of the output signal of the first device (3) and acting on the driver stage (6) via its output.

2. Signal processing unit according to Claim 1,
**characterized by** a picture storage device (5) connected to the first and second devices (3, 4) for reading picture data in and out.

3. Signal processing unit according to Claim 2,
**characterized in that** the second device (4) can increase the frame rate by reading out and reproducing a preceding picture stored in the picture storage device (5).

4. Signal processing unit according to Claim 2,
**characterized in that** the second device (4) can vary the frame rate by reading out and reproducing an intermediate picture which is stored in the picture storage device (5) and is calculated by motion evaluation and picture interpolation using preceding pictures.

5. Signal processing unit according to one of Claims 2 to 4,
**characterized in that** the second device (4) can freely vary the picture format by reading out and reproducing the pixel intermediate values which are stored in the picture storage device (5) and are calculated by motion evaluation and pixel interpolation with the aid of preceding pictures.

6. Signal processing unit according to one of Claims 2 to 5,
**characterized in that** the second device (4) can convert the picture scan mode from interlaced to progressive scan by reading out and reproducing the intermediate pictures which are stored in the picture storage device (5) and are calculated by motion evaluation and picture interpolation with the aid of preceding pictures.

7. Signal processing unit according to one of the preceding claims,
**characterized by** at least one input stage (1) for receiving compressed picture data from at least one transmission medium, and also at least one decoding unit (2) for converting the picture data into digital pixel data of an overall data stream which is fed to the first device (3).

## Revendications

1. Unité de traitement de signaux pour système de télévision numérique, comprenant un premier dispositif (3) pour charger un signal vidéo avec des éléments d'image graphiques et des symboles de texte, un deuxième dispositif (4) pour convertir une fréquence d'image et un étage excitateur (6) pour commander un affichage (6a), la sortie du premier dispositif (3). étant reliée à l'entrée du deuxième dispositif (4), et le deuxième dispositif (4) étant réalisé pour augmenter la fréquence d'image du signal de sortie du premier dispositif (3) et chargeant l'étage excitateur (6) par l'intermédiaire de sa sortie.

2. Unité de traitement de signaux selon la revendication 1, **caractérisée par** un dispositif de mémoire d'image (5) qui est reliée au premier et au deuxième dispositif (3, 4) pour entrer et sortir des données d'image.

3. Unité de traitement de signaux selon la revendication 2, **caractérisée en ce que** le deuxième dispositif (4) permet d'augmenter la fréquence d'image en sortant et en reproduisant une image précédente mémorisée dans le dispositif de mémoire d'image (5).

4. Unité de traitement de signaux selon la revendication 2, **caractérisée en ce que** le deuxième dispositif (4) permet de faire varier la fréquence d'image en sortant et en reproduisant une image intermédiaire mémorisée dans le dispositif de mémoire d'image (5) et calculée par une évaluation de mouvement et une interpolation d'images à l'aide d'images précédentes.

5. Unité de traitement de signaux selon l'une quelconque des revendications 2 à 4, **caractérisée en ce que** le deuxième dispositif (4) permet de faire varier librement le format d'image en sortant et reproduisant des valeurs intermédiaires de pixel mémorisées dans le dispositif de mémoire d'image (5) et calculées par une évaluation de mouvement et une interpolation de pixels à l'aide d'images précédentes.

6. Unité de traitement de signaux selon l'une quelconque des revendications 2 à 5, **caractérisée en ce** le deuxième dispositif (4) permet de convertir le mode de balayage d'image du mode entrelacé au mode balayage progressif en sortant et en reproduisant des images intermédiaires mémorisées dans le dispositif de mémoire d'image (5) et calculées par une évaluation de mouvement et une interpolation d'images à l'aide d'images précédentes.

7. Unité de traitement de signaux selon l'une quelconque des revendications précédentes, **caractérisée par** au moins un étage d'entrée (1) pour recevoir des données d'image comprimées en provenance d'au moins un support de transmission, ainsi qu'au moins une unité de décodage (2) pour convertir les données d'image en données de pixel numériques d'un flux de données global qui est amené au premier dispositif (3).
